# EUROPEAN PATENT SPECIFICATION

(11) **EP 0 691 293 B1**
(45) Date of publication and mention of the grant of the patent: **02.09.1998**
(21) Application number: 95201722.6
(22) Date of filing: 24.06.1995
(51) Int. Cl.: B65G 59/00, B65G 1/06, A47F 1/06

(54) **Automatic dispenser for packaged products, particularly for packages such as cans**
Automat für verpackte Produkte, insbesondere für Packungen wie Dosen
Distributeur automatique pour produits emballés, en particulier des emballages tels que des boîtes

(30) Priority: 04.07.1994 IT PD940123
(43) Date of publication of application: 10.01.1996
(73) Proprietor: NUOVA INOX S.r.l., 36016 Thiene (Vicenza) (IT)
(72) Inventor: Tedesco, Antonio, I-36016 Thiene (Vicenza) (IT)
(74) Representative: Cantaluppi, Stefano

(56) References cited:
- US-A- 4 437 580
- SOVIET INVENTIONS ILLUSTRATED, P,Q sections, week 9045, 1990, December 19, DERWENT PUBLICATIONS LTD., London; & SU-A-1 533 954 (BEARING WKS)

## Description

The invention relates to an automatic dispenser for packaged products, particularly for packages such as cans, of the type comprising an opening for the delivery of the packages from a magazine. The following description refers explicitly to packages such as cans, for example, those typically used for drinks and beverages in general, these packages also being indicated by the term "cans". It should be understood that the invention is also suitable for the delivery of other packages provided that they are preferably supplied to a delivery opening by falling from a magazine.

Automatic dispensers including the characteristics indicated above are widely known in the specific technical field and in the field of dispensers for canned products in particular.

The need addressed by the invention is to improve the ergonomic characteristics of these dispensers with regard to the position of the delivery opening.

Automatic dispensers produced according to the prior art comprise a delivery opening supplied by cans which fall from the storage magazine. The delivery opening is consequently disposed at a level below the base of the magazine from which the products are delivered. This configuration generally restricts the position of the delivery opening to the lower half of the front wall of the dispenser.

In the case of large-capacity and hence tall dispensers, this restriction is not a disadvantage per se since an ergonomically favourable position of the delivery opening such as to allow the can supplied to be collected without the need necessarily to bend down is in any case achieved. Moreover, the lower portion of the dispenser which is not used as a magazine can, in any case, conveniently be used as a technical compartment for, for example, housing the refrigeration unit of the dispenser.

In the case of smaller dispensers, such as those for offices and/or small groups, however, the restriction indicated is a disadvantage, given the limited overall height of the dispenser and the consequent low position of the delivery opening; it is thus frequently necessary to bend down in order to pick up the can delivered. This disadvantage renders the dispenser potentially inaccessible to people who have problems in bending. On the other hand, the possibility of installing the dispenser in a raised position is sometimes limited since it can serve as a support for other equipment which itself has to be accessible to the user and consequently has to be positioned at an ergonomically favourable height.

SU-A-1533 954 discloses a stacking and transferring device for cylindrical items. The device can transfer the items from one level to another. The publication however fails to disclose an automatic dispenser for packages such as cans.

This problem is solved by the invention by means of an automatic dispenser according to the appended claims.

The characteristics and advantages of the invention will become clearer from the following detailed description of a preferred but not exclusive embodiment thereof which is described by way of non-limiting example with reference to the appended drawings, in which:
- Figure 1 is a partially-sectioned perspective view of an automatic dispenser according to the invention,
- Figure 2 is a partially-sectioned side view of the automatic dispenser of Figure 1,

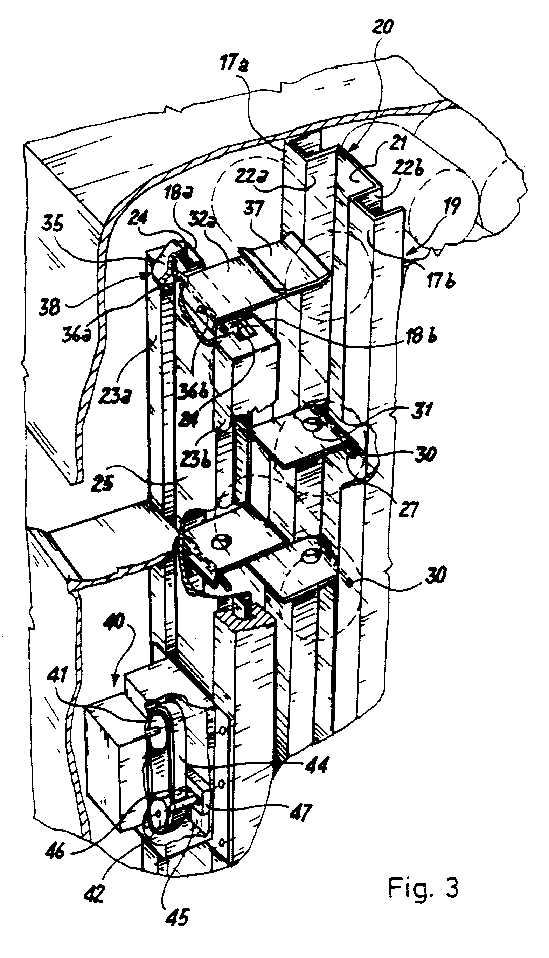

- Figure 3 is a partial perspective view of a detail of the dispenser of Figure 1,
- Figures 4 to 8 are schematic side views of the detail of Figure 3 showing the stages of its operation in sequence,
- Figure 9 is a partially-sectioned perspective view of the body of a dispenser according to the invention,
- Figure 10 is a perspective view of the dispenser of Figure 9,
- Figure 11 is a transverse section of a detail of the dispenser of Figures 9 and 10,
- Figure 12 is a partially-sectioned perspective view of a further detail of the dispenser of Figures 9 and 10.

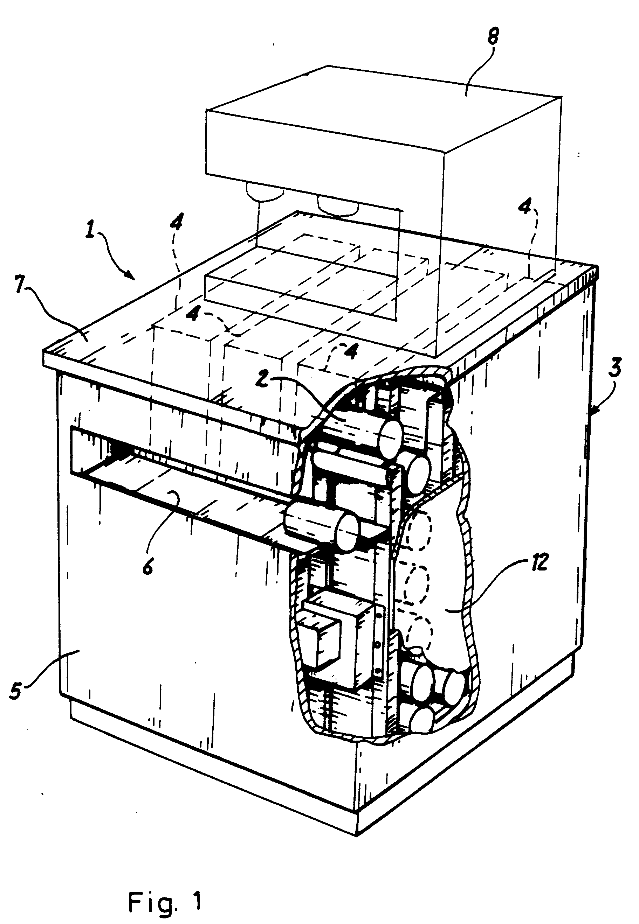

In Figure 1, an automatic dispenser for packages 2 such as cans, is generally indicated 1. The dispenser 1 comprises a plurality of individual dispenser devices 4 which are disposed side by side in the same body 3, but which are structurally and functionally independent. A single device is described in detail below, it being understood that the number of devices may vary according to need.

A transversely elongate opening 6 is formed in the upper half of a front wall 5 defined by the body 3. The top of the body 3 bears a top surface 7 constituting a support for auxiliary equipment such as a coffee machine 8.

Each dispenser device 4 comprises a magazine 9 into which the cans 2 are fed by falling, along a labyrinthine path, onto an inclined plane 10 defined by two parallel, spaced-apart L-shaped profiled sections indicated 11. Each of the latter is fixed to a respective side wall 12 of the dispenser device 4.

The inclined plane 10 extends beyond a first delivery opening 13 through which the cans 2 are supplied in sequence to lifting means, generally indicated 14.

The lifting means 14 extends between the first delivery opening 13 of the magazine 9 and a second delivery opening 15, which is disposed above the first, adjacent the opening 6, and supply the latter with the cans 2 which are delivered by falling from the magazine 9.

Guide means are identified in the lifting means 14 for forming and holding a column 16 of cans 2a, b, c, d in a guide between the first delivery opening 13 and the second delivery opening 15. The cans are restrained by two pairs of guides indicated 17a,b and 18a,b, respectively, and by the corresponding portions of the side walls 12. The guides 17a,b are formed in corresponding flanges of a profiled section 19 in which a channel 20 with a base 21 and walls 22a,b is defined. The guides 18a,b are formed in corresponding surfaces, facing the guides 17a,b, of two channel-shaped profiled sections 23a,b fixed to the walls 12 and arranged with respective channels 24 facing one another. A frame 25 is guided for sliding between the channels 24 and can move with an operative stroke parallel to the vertical length of the column 16 of cans 2a-d.

Respective first and second one-way restraint members provided on the frame 25 and on the profiled section 19 permit an operative stroke for lifting the cans 2 vertically along the column 16 from the first delivery opening to the second, but interfere with the descent of the cans in order to restrain them in the positions reached as a result of the operative stroke.

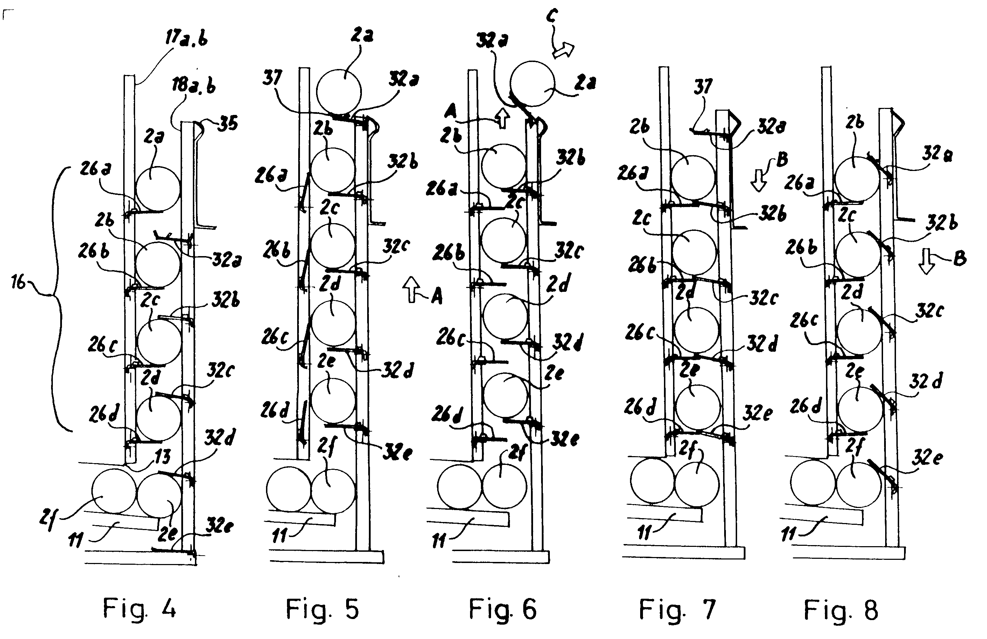

The first restraint members comprise a plurality of parallel plates 26a, b, c, d disposed at intervals along the column 16. Each plate is hinged at one end by means of a pin 30 between the walls 22a,b of the profiled section 19 near the base 21 thereof and bears a substantially perpendicular lip 27. By virtue of this shape, the plates 26a-d can pivot from operative positions in which they interfere with the cans 2a-d of the column 16 and in which the lip 27 is in abutment with the base 21 (Figure 4) towards inoperative positions (Figure 5) in which they do not interfere with the cans 2a-d of the column 16. To prevent the plates 26a-d from remaining in equilibrium in their inoperative positions, they bear projections 31 for limiting their pivoting relative to the base 21 of the channel 20.

The second restraint members also comprise a plurality of parallel plates 32a,b,c,d,e having structures substantially identical to those of the plates 26a-d the description of which should be referred to for further detail. In addition to the typical shape of the plates 32b-e, the top plate 32a of this plurality has two pegs 36a,b projecting at a predetermined angle adjacent the pin 30. Upon completion of the operative stroke defined above, these pegs interfere with a stop element 35 extending transversely between the top ends of the profiled sections 23a,b so as to cause the top plate 32a to pivot instantaneously in the direction indicated by the arrow C in Figure 6. As a result of this pivoting, the can 2a which is supported on a cradle 37 fixed to the plate 32a is catapulted into the second delivery opening 15. For this reason, the pegs 36a,b and the stop element 35 are also indicated by the term "catapult device", generally indicated 38.

The operative stroke of the frame 25 in order to lift the cans 2 in the direction of the arrow A in Figure 5 and its downward stroke in the direction of the arrow B of Figure 7 are brought about by drive means, generally indicated 40, including an endless belt 44 extending between two pulleys 41, 42 of which one is motor-driven. A peg 45, fixed to the belt 44, is engaged in a slot 46 in a cross-member 47 which in turn is fixed to the frame 25. The slot 46 extends transverse the direction of movement of the frame 25.

Figures 4 to 8 show the stages of the operating sequence of the dispenser device 4.

Starting from an initial condition in which a first can 2e is supplied by falling through the first delivery opening 13, the can is stopped resting against the guides 18a,b. The frame 25 is driven by the drive means 40 so that the plate 32e is placed beneath the can 2e which is ready to be lifted thereby.

The operation of the drive means 40 starts the operative lifting stroke of the frame 25. The plate 32e comes into contact with the can 2e lifting it beyond the plate 26d of the profiled section 19, this plate first being pivoted to the inoperative position by the can 2e and then falling back behind it to the operative position of Figure 6.

The frame is then driven again by the drive means 40 with a downward stroke during which the can 2e is first deposited on the plate 26d and restrained thereby in the raised position reached; the plate 32e is then passed over a further can 2f which has been supplied in the meantime at the first delivery opening 13, the plate 32e pivoting about the pin 30 so as to extend in the operative position beneath the can 2f.

During a further operative stroke of the frame 25, the can 2f is lifted so as to be placed on the plate 26d as in the sequence described above, whilst the can 2e is lifted further by means of the plate 32d so as to be placed on the immediately adjacent plate 26c. The operation is repeated until the entire column 16 of cans 2a-d shown in Figure 4 has been formed.

This operative cycle can also complete the delivery of all of the packages 2 provided in the magazine 9, completely emptying the column 16.

Starting from the condition in which the can 2a at the top of the column 16 is resting on the plate 26a, it is lifted by the plate 32a, during the operative stroke, until the pegs 36a,b are brought to interfere with the stop element 35 bringing about instantaneous pivoting of the plate towards the position of Figure 6. The catapult effect projects the can 2a into the second delivery opening 15.

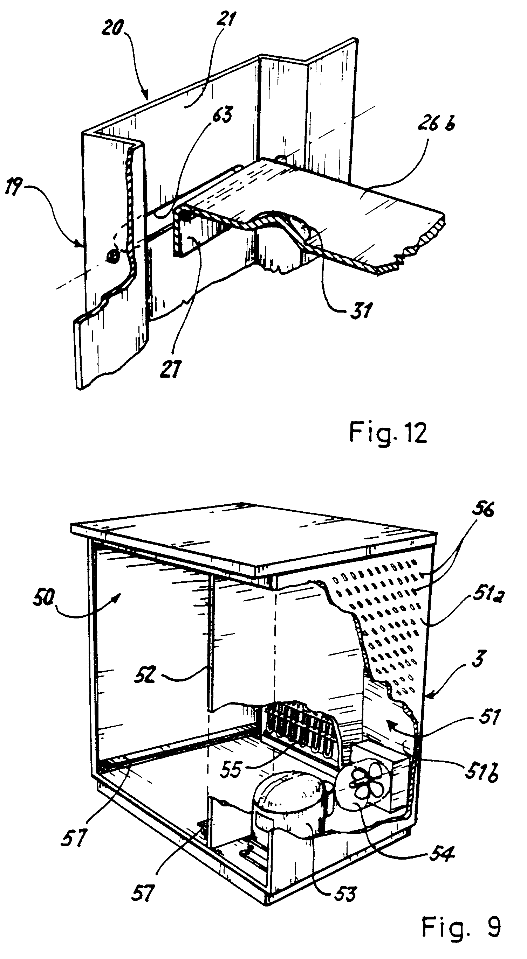

Figure 9 shows a preferred embodiment of the body 3. It is divided into two compartments 50, 51 by a thermally insulating wall 52; the compartment 50 which is intended to house the dispenser devices 4 and an evaporator 55 of a refrigerating circuit is in turn fully insulated, whereas the compartment 51, which is intended to house a compressor 53 and a condenser 54 of the refrigeration circuit of which the evaporator 55 forms part, is preferably closed by walls 51a,b having ventilation slots 56.

Two tracks, both indicated 57, are mounted on the wall 52 and on the juxtaposed wall of the compartment 50 and, by means of carriages 58, slidingly support a framework 59 having a front cross-member 60 provided with a plurality of holes 61 spaced apart at modular intervals. The holes 61 are provided as means for the fixing of the dispenser devices 4 to the framework 59 and their spacing is such as to allow dispensers 4 of different widths (understood as the distance between the side walls 12 of each dispenser device) to be mounted on the same framework 59; for example, starting from the thermally insulating wall 52, there is a first pair of dispensers 4 disposed side by side and of a width suitable for housing conventional 33cl cans, followed by a narrower dispenser device 4, for example, for 25cl cans, in turn followed by a wider dispenser device 4, for example, for 50cl cans. The ability to combine dispenser devices 4 of different widths on the same framework 59 enables the final user to vary the type of cans supplied at will even after the installation of the dispenser 1, simply by removing one or more of the devices 4 and replacing them with devices of the desired width.

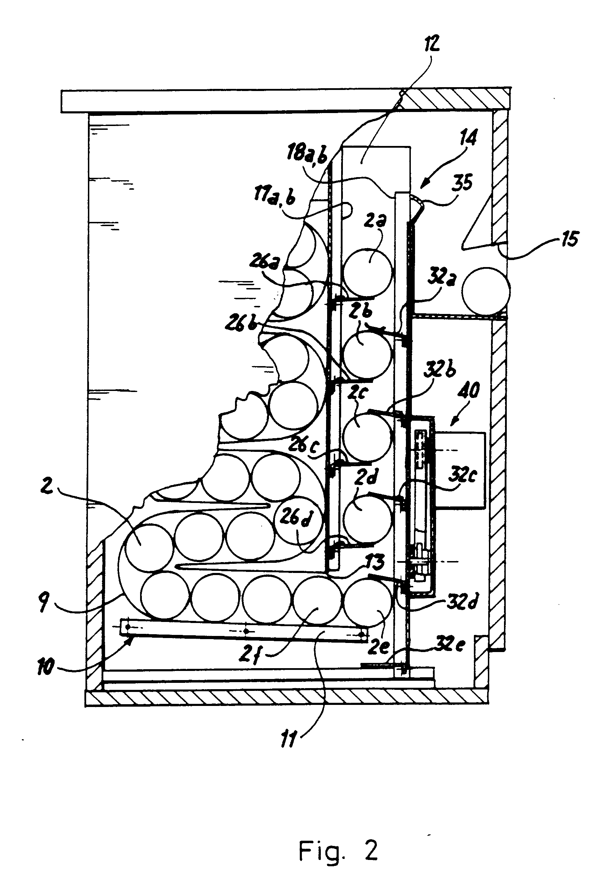

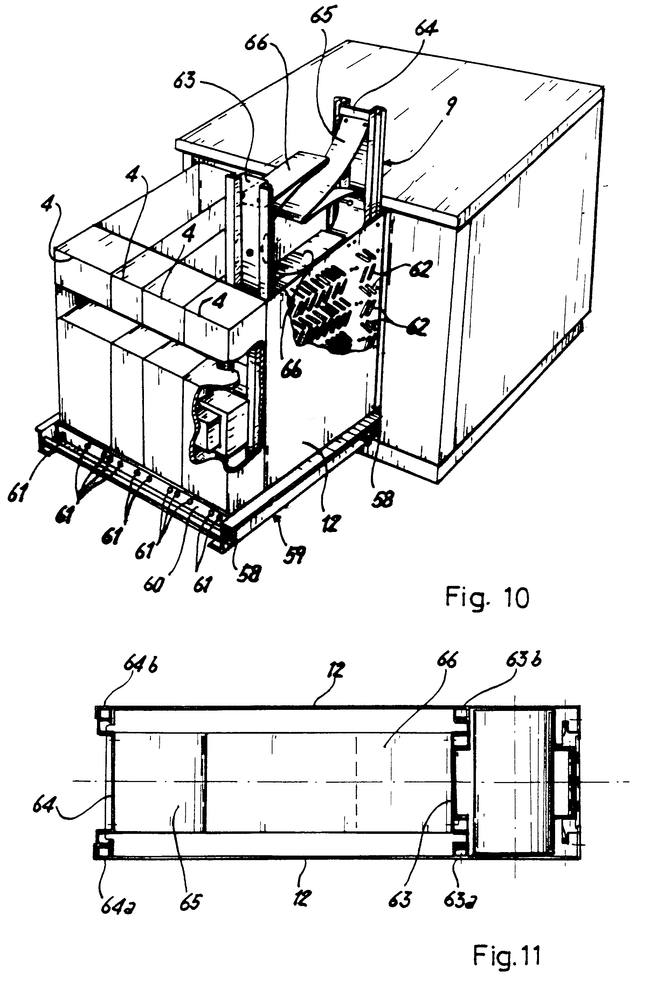

To facilitate the circulation of cooled air between the cans housed in the magazines 9, the side walls 12 of each device 4 are perforated by slots 62. Moreover, to facilitate the maintenance and cleaning of the dispenser devices, the magazine 9 has been made removable from the device with which it is associated. This is achieved by forming the magazine 9 with two plates 63, 64 which are guided removably between the walls 12 in respective guides 63a,b and 64a,b, as indicated in Figure 11, and to which are fixed cusp-shaped deflectors 65, 66 the walls of which are interposed between one another like a comb and spaced apart to define the labyrinthine path shown partially in Figures 2 and 10 when the plates 63, 64 are fully inserted (in the operative position) between the guides 63a,b and 64a,b.

Finally, to improve the reliability of the lifting means 14, an opening 63 is formed in the wall of the profiled section 19 and of the frame 25 adjacent the region in which the corresponding plate is hinged (the embodiment of Figure 12 relates to the plate 26b but the same measure is also provided for in corresponding positions for the rest of the plates), its function being to prevent dirt, residues or other undesired material from being interposed between the base 21 of the channel 20 (or the corresponding walls of the frame 25) and the lip 27 of the corresponding plate 26a-d.

The invention thus solves the problem posed achieving many advantages in comparison with known solutions. A first advantage consists of the fact that the lifting means enable a can to be supplied to the second delivery opening with a limited stroke, regardless of the distance of this opening from the first delivery opening of the magazine. This is achieved regardless of whether means are provided for lifting each can of the column individually.

Another advantage is that of allowing the dispenser to be emptied completely, including the packages of the column. This is achieved by providing for the individual lifting and restraint of each package.

Not the least advantage is that of being able to produce dispensers by placing several devices which are functionally independent as regards the respective lifting means side by side. This permits automatic dispensing of different products for each dispenser device.

## Claims

1. An automatic dispenser for packaged products, particularly for packages such as cans, comprising at least one dispenser device (4) with a first delivery opening (13) for the packages, supplied by packages which fall from a magazine (9), characterized in that the dispenser device (4) comprises a second delivery opening (15) disposed above the first opening (13) and lifting means (14) between the openings (13, 15) for lifting a package delivered at the first opening (13) and supplying the package to the second opening (15) the lifting means comprising means for forming a column (16) of packages between the openings and means (26a-d, 32a-e, 40) for lifting the column with a stroke sufficient to supply a new package (2f) delivered from the first opening (13) to the base of the column and simultaneously to deliver the top package (2a) of the column to the second opening (15), the means for lifting the column of packages comprising a plurality of first and second one-way restraint members (26a-d, 32a-e), the first restraint members (26a-d) being distributed along the column at intervals in order to restrain each can of the column in the position reached as a result of the lifting stroke, and in which the second restraint members (32a-e) act independently on each can of the column and are associated with the corresponding first restraint members so that, as a result of the lifting stroke, they lift each can from the corresponding first restraint member to the adjacent first restraint member in the direction of the lifting stroke.

2. A dispenser according to Claim 1, in which the first and second one-way restraint members comprise respective pluralities of plates (26a-d, 32a-e) distributed at intervals and articulated on respective first and second frames (19, 25) for limited pivoting between operative positions in which they interfere with the packages of the column and inoperative or non-interfering positions, the frames being movable relative to one another under the action of drive means (40) in order to transfer the packages with a stepped movement in the direction of the lifting stroke.

3. A dispenser according to Claim 1 or Claim 2, in which the second one-way restraint members comprise a catapult device (38) for catapulting the top package (2a) of the column (16) into the second delivery opening (15) upon completion of the lifting stroke.

4. A dispenser according to Claim 3, in which the catapult device comprises at least one peg (36a, b) projecting at a predetermined angle from the top plate (32a) of the second restraint means, and a stop element (35) extending transverse the direction of movement of the second frame, fixed to the first frame, and shaped so as to interfere with the peg upon completion of the lifting stroke.

5. A dispenser according to Claim 2, in which the plates (26a-d, 32a-e) bear respective projections (31) which can prevent the plates from remaining in the inoperative positions.

6. A dispenser according to Claim 2, in which each plate is hinged at one end by means of a respective pin (30) between corresponding facing walls of the first and second frames (19, 25).

7. A dispenser according to Claim 2, in which one end of each plate has a respective substantially perpendicular lip (27) which can interfere with the respective first and second frames (19, 25) to keep the plates in the operative position.

8. A dispenser according to Claim 2, in which the magazine comprises a chute (10) with an inclined plane including a pair of parallel and spaced-apart profiled sections (11) extending beyond the first deliver opening (13) at the sides of the path of the plates.

9. A dispenser according to Claim 2, in which the drive means (40) comprise an endless belt (44) extending between two pulleys (41, 42) of which one is motor-driven, and a peg (45) fixed to the belt and engaged in a slot (46) formed in a cross-member (47) fixed to the second frame.

10. A dispenser according to one or more of the preceding claims, comprising a plurality of individual dispenser devices (4) side by side in the same body (3).

11. A dispenser according to Claim 10 in which the body (3) comprises a compartment (50) in which the dispenser devices (4) are mounted removably.

12. A dispenser according to Claim 11 in which the compartment (50) is insulated and refrigerated.

13. A dispenser according to Claim 10, 11, or 12, in which a framework (59) for supporting the dispenser devices (4) is mounted removably in the compartment (50), the dispenser devices being assembled in a pack on the framework and being interchangeably replaceable thereon by dispenser devices of different widths.

14. A dispenser according to one or more of the preceding claims, in which the magazine (9) can be removed from the dispenser device (4) with which it is associated.

15. A dispenser according to Claim 14 in which each magazine (9) comprises two plates (63, 64) guided removably between opposed walls (12) of the corresponding dispenser device, deflectors (65, 66) being fixed to the plates and being interposed between one another like a comb to define a labyrinthine path.

## Patentansprüche

1. Ein automatisches Ausgabegerät für abgepackte Produkte, insbesondere für Packungen, wie etwa Büchsen, mit zumindest einer Ausgabeeinrichtung (4) mit einer ersten Abgabeöffnung (13) für die Packungen, wobei diese Abgabeöffnung mit Packungen versorgt wird, die aus einem Magazin (9) nach unten fallen, **dadurch gekennzeichnet**, daß die Ausgabeeinrichtung (4) eine zweite Abgabeöffnung (15) aufweist, die oberhalb der ersten Abgabeöffnung (13) angeordnet ist, sowie eine Hebeeinrichtung (14) vorgesehen ist, die zwischen den Öffnungen (13, 15) angeordnet ist, um eine Packung anzuheben, die an der ersten Öffnung (13) angelangt ist, um diese Packung zu der zweiten Öffnung (15) weiter zu fördern, wobei die Hebeeinrichtung Mittel zur Ausbildung eines Stapels (16) von Packungen zwischen den Öffnungen aufweist und Mittel (26a-d, 32a-e, 40) zum Anheben des Stapels aufweist, um mit einem Hub, der ausreichend ist, um eine neue Packung (2f), die an der ersten Öffnung (13) angelangt ist, zu der Basis des Stapels zu fördern, und um gleichzeitig die oberste Packung (2a) des Stapels zu der zweiten Öffnung (15) zu fördern, wobei die Mittel zum Anheben des Stapels der Packungen eine Mehrzahl von ersten und von zweiten Haltegliedern (26a-d, 32a-e) umfassen, die in einer Richtung wirken, wobei die ersten Halteglieder (26a-d) entlang des Stapels in Abständen verteilt sind, um jede Büchse des Stapels in der Position zu halten, die als Ergebnis des Anhebens um den Hub erreicht ist, und wobei die zweiten Halteglieder (32a-e) auf jede Büchse des Stapels unabhängig einwirken, sowie sie mit den zugeordneten ersten Haltegliedern so zusammenwirken, daß sie als Ergebnis des Anhebens, jede Büchse von einem zugeordneten ersten Halteglied in Richtung des Hubs zum benachbarten ersten Halteglied anheben.

2. Ausgabegerät nach Anspruch 1, wobei die ersten und die zweiten Halteglieder, die in einer Richtung wirken, eine Mehrzahl von Platten (26a-d, 32a-e) umfassen, die in Abständen verteilt sind und die jeweils an ersten und an zweiten Rahmenteilen (19, 25) angelenkt sind, um das Verschwenken zwischen Betriebspositionen, in denen sie in den Stapel der Packungen eingreifen, und Nicht-Betriebspositionen oder Nicht-Eingriffspositionen zu beschränken, wobei die Rahmenteile relativ zueinander bewegbar sind, nämlich unter der Einwirkung von Antriebsmitteln (40), um die Packungen schrittweise in Richtung des Hebehubes zu bewegen.

3. Ausgabegerät nach Anspruch 1 oder 2, wobei die zweiten Halteglieder, die in einer Richtung wirken, eine Wurfeinrichtung (38) aufweisen, um die oberste Packung (2a) des Stapels (16) nach Beendigung des Hebehubes in die zweite Abgabeöffnung (15) zu werfen.

4. Ausgabegerät nach Anspruch 3, wobei die Wurfeinrichtung zumindest einen Zapfen (36a, b) aufweist, der unter einem vorbestimmten Winkel von der obersten Platte (32a) der zweiten Halteglieder vorsteht, sowie sie einen Anschlag (35) aufweist, welcher sich quer zu der Richtung der Bewegung des zweiten Rahmenteils erstreckt, und der an dem ersten Rahmentteil befestigt ist, wobei der Anschlag eine solche Form aufweist, daß er mit dem Zapfen in Eingriff gelangt, wenn der Hebehub beendet wird.

5. Ausgabegerät nach Anspruch 2, wobei die Platten (26a-d, 32a-e) jeweils Vorsprünge (31) aufweisen, die verhindern, daß die Platten in den Nicht-Betriebspositionen verbleiben.

6. Ausgabegerät nach Anspruch 2, wobei jede Platte an einem Ende mittels eines zugehörigen Stiftes (30) gelenkig zwischen sich entsprechenden Seitenwänden der ersten und der zweiten Rahmenteile (19, 25) befestigt ist.

7. Ausgabegerät nach Anspruch 2, wobei ein Ende jeder Platte eine im wesentlichen senkrecht dazu verlaufende Lippe (27) aufweist, die mit den jeweiligen ersten und zweiten Rahmenteilen (19, 25) in Eingriff gelangen kann, um die Platten in den Betriebspositionen zu halten.

8. Ausgabegerät nach Anspruch 2, wobei das Magazin einen Rollschacht (10) aufweist, der eine geneigte Ebene aufweist, die ein Paar von parallelen und zueinander beabstandeten profilierten Abschnitten (11) haben, die sich auf der Seite der Transportwege der Platten bis über die erste Abgabeöffnung (13) hinaus erstrecken.

9. Ausgabegerät nach Anspruch 2, wobei die Antriebsmittel (40) einen Endlosgurt (44) umfassen, der sich zwischen zwei Scheiben (41, 42) erstreckt, wobei eine der Scheiben durch einen Motor angetrieben ist, sowie ein Zapfen (45) vorgesehen ist, der an dem Gurt befestigt ist und mit einem Schlitz (46) in Eingriff steht, der in einem Querträger (47) ausgebildet ist, der an dem zweiten Rahmenteil befestigt ist.

10. Ausgabegerät nach einem oder mehreren der vorhergehenden Ansprüche, wobei eine Mehrzahl von einzelnen Ausgabeeinrichtungen (4) nebeneinander in dem gleichen Körper (3) vorgesehen ist.

11. Ausgabegerät nach Anspruch 10, wobei der Körper (3) ein Abteil (50) umfaßt, in dem die Ausgabeeinrichtungen (4) herausnehmbar installiert sind.

12. Ausgabegerät nach Anspruch 11, wobei das Abteil (50) isoliert und gekühlt ist.

13. Ausgabegerät nach Anspruch 10, 11 oder 12, wobei ein Rahmen (59) zum Abstützen der Ausgabeeinrichtungen (4) herausnehmbar in dem Abteil (50) montiert ist, und wobei die Ausgabeeinrichtungen (4) als eine Einheit auf dem Rahmen (59) montiert sind, sowie die Ausgabeeinrichtungen durch andere Ausgabeeinrichtungen mit unterschiedlicher Breite auswechselbar bzw. austauschbar sind.

14. Ausgabegerät nach einem oder mehreren der vorhergehenden Ansprüche, wobei das Magazin (9) von der Ausgabeeinrichtung (4) entfernbar ist, dem es zugeordnet ist.

15. Ausgabegerät nach Anspruch 14, wobei jedes Magazin (9) zwei Platten (63, 64) umfaßt, die zwischen gegenüberliegenden Wänden (12) der zugehörigen Ausgabeeinrichtung (4) entfernbar geführt sind, sowie Ablenkeinrichtungen (65, 66) vorgesehen sind, die an den Platten befestigt sind und die kammartig ineinander eingreifen, um einen labyrinthförmigen Transportweg auszubilden.

## Revendications

1. Distributeur automatique de produits emballés, en particulier d'emballages tels que des boîtes, comprenant au moins un appareil distributeur (4) ayant une première ouverture (13) de distribution des emballages, recevant les emballages qui tombent d'un magasin (9), caractérisé en ce que l'appareil distributeur (4) comporte une seconde ouverture de distribution (15) placée au-dessus de la première ouverture (13) et un dispositif de soulèvement (14) placé entre les ouvertures (13, 15) et destiné à soulever un emballage transmis à la première ouverture (13) et à transmettre l'emballage à la seconde ouverture (15), le dispositif de soulèvement comprenant un dispositif destiné à former une colonne (16) d'emballages entre les ouvertures, et un dispositif (26a-d, 32a-e, 40) destiné à soulever la colonne avec une course suffisante pour qu'un nouvel emballage (2f) transmis par la première ouverture (13) soit transmis à la base de la colonne et simultanément que l'emballage supérieur (2a) de la colonne soit transmis à la seconde ouverture (15), le dispositif de soulèvement de la colonne d'emballages comprenant plusieurs premiers et seconds organes de retenue unidirectionnelle (26a-d, 32a-e), les premiers organes de retenue (26a-d) étant distribués le long de la colonne à certains intervalles afin qu'ils retiennent chaque boîte de la colonne en position atteinte à la suite de la course de soulèvement, et dans lequel les seconds organes de retenue (32a-e) agissent indépendamment sur chaque boîte de la colonne et sont associés aux premiers organes correspondants de retenue de manière que, à la suite de la course de soulèvement, ils soulèvent chaque boîte du premier organe correspondant de retenue au premier organe adjacent de retenue dans la direction de la course de soulèvement.

2. Distributeur selon la revendication 1, dans lequel les premiers et seconds organes de retenue unidirectionnelle comprennent plusieurs ensembles respectifs de plaques (26a-d, 32a-e) répartis à certains intervalles et articulés sur un premier et un second châssis respectif (19, 25) afin qu'ils puissent pivoter de manière limitée entre des positions de fonctionnement, dans lesquelles ils sont au contact des emballages de la colonne, et des positions de repos ou sans contact, les châssis étant mobiles l'un par rapport à l'autre sous l'action d'un dispositif d'entraînement (40) pour que les emballages soient transférés avec un mouvement discontinu dans la direction de la course de soulèvement.

3. Distributeur selon la revendication 1 ou 2, dans lequel les seconds organes de retenue unidirectionnelle comprennent un dispositif à catapulte (38) destiné à catapulter l'emballage supérieur (2a) de la colonne (16) dans la seconde ouverture de distribution (15) lors de la fin de la course de soulèvement.

4. Distributeur selon la revendication 3, dans lequel le dispositif à catapulte comporte au moins un picot (36a,b) dépassant d'un angle prédéterminé de la plaque supérieure (32a) du second dispositif de retenue, et un élément d'arrêt (35) disposé transversalement à la direction de déplacement du second châssis, fixé au premier châssis et dont la forme est telle qu'il vient au contact du picot vers la fin de la course de soulèvement.

5. Distributeur selon la revendication 2, dans lequel les plaques (26a-d, 32a-e) sont en appui sur des saillies respectives (31) qui permettent d'éviter que les plaques ne restent en position de repos.

6. Distributeur selon la revendication 2, dans lequel chaque plaque est articulée à une première extrémité sur une broche respective (30) entre des parois latérales correspondantes du premier et du second châssis (19, 25).

7. Distributeur selon la revendication 2, dans lequel une première extrémité de chaque plaque a une lèvre respective pratiquement perpendiculaire (27) qui peut venir au contact du premier et du second châssis respectif (19, 25) afin que les plaques soient maintenues en position de fonctionnement.

8. Distributeur selon la revendication 2, dans lequel le magasin comporte une goulotte (10) ayant un plan incliné qui comprend deux tronçons profilés parallèles et espacés (11) s'étendant au-delà de la première ouverture de distribution (13) sur les côtés du trajet des plaques.

9. Distributeur selon la revendication 2, dans lequel le dispositif d'entraînement (40) comporte une courroie sans fin (44) qui s'étend entre deux poulies (41, 42) dont l'une est entraînée par un moteur, et un picot (45) fixé à la courroie et coopérant avec une fente (46) formée dans un organe transversal (47) fixé au second châssis.

10. Distributeur selon une ou plusieurs des revendications précédentes, comprenant plusieurs dispositifs distributeurs individuels (4) placés côte à côte dans le même corps (3).

11. Distributeur selon la revendication 10, dans lequel le corps (3) comprend un compartiment (50) dans lequel les dispositifs distributeurs (4) sont montés de façon amovible.

12. Distributeur selon la revendication 11, dans lequel le compartiment (50) est isolé et réfrigéré.

13. Distributeur selon la revendication 10, 11 ou 12, dans lequel une ossature (59) de support des dispositifs distributeurs (4) est montée de façon amovible dans le compartiment (50), les dispositifs distributeurs étant assemblés sous forme regroupée sur l'ossature et pouvant être remplacés de façon interchangeable par des dispositifs distributeurs de largeurs différentes.

14. Distributeur selon une ou plusieurs des revendications précédentes, dans lequel un magasin (9) peut être retiré de l'appareil distributeur (4) auquel il est associé.

15. Distributeur selon la revendication 14, dans lequel chaque magasin (9) comporte deux plaques (63, 64) guidées afin qu'elles soient amovibles entre les parois opposées (12) de l'appareil distributeur correspondant, des déflecteurs (65, 66) étant fixés aux plaques et étant disposés sous forme imbriquée comme un peigne pour la formation d'un trajet en labyrinthe.
